# EUROPÄISCHE PATENTSCHRIFT

(11) **EP 0 445 772 B1**
(45) Veröffentlichungstag und Bekanntmachung des Hinweises auf die Patenterteilung: **02.08.1995**
(21) Anmeldenummer: 91103409.8
(22) Anmeldetag: 06.03.1991
(51) Int. Cl.: B65D 90/06, F22B 37/24, F16L 59/00, F16L 59/12

(54) **Halterungskonstruktion für eine Wärmedämmung**
Support construction for a thermal insulation
Construction de support pour une isolation thermique

(30) Priorität: 09.03.1990 DE 4007555
(43) Veröffentlichungstag der Anmeldung: 11.09.1991
(73) Patentinhaber: G + H MONTAGE GMBH, D-67059 Ludwigshafen (DE); PreussenElektra Aktiengesellschaft, 30457 Hannover (DE)
(72) Erfinder: Floca, Johann, D-69502 Hemsbach (DE); Mehrens, Horst, D-26935 Stadland (DE)
(74) Vertreter: Grünecker, Kinkeldey, Stockmair & Schwanhäusser Anwaltssozietät

(56) Entgegenhaltungen:
- DE-A- 2 842 254
- DE-A- 3 420 996
- FR-A- 1 591 261
- FR-A- 2 315 055
- FR-A- 2 561 749
- US-A- 4 044 517
- PATENT ABSTRACTS OF JAPAN vol. 3, no. 16 (M-48)10. Februar 1979
- PATENT ABSTRACTS OF JAPAN vol. 1, no. 71 (M-77)11. Juli 1977

## Beschreibung

Die Erfindung betrifft eine Wärmedämmung oder/und Schalldämmung mit einer Halterungskonstruktion entsprechend dem Oberbegriff des Anspruchs 1.

Die Befestigung von Wärmedämmungen an Behältern, Wärmetauschern, Dampferzeugern oder ähnlichen mit einer Wärmdämmung zu versehenden Objekten stellt immer wieder ein Problem dar. Die Tragekonstruktion solcher Wärmedämmungen muß mitunter eine Vielzahl von Anforderungen erfüllen, um unter allen auftretenden Einflüssen und möglichen Einsatzbedingungen eine sichere Halterung der Dämmung, die meistens aus einzelnen Dämmelementen zusammengesetzt ist, zu gewährleisten. Durch die Tragkonstruktion müssen, um insbesondere eine ausreichende Homogenität der Wärmedämmung zu gewährleisten, die Dämmelemente gegen Verrutschen, Verklemmen oder Verkanten gesichert sein.

Besondere konstruktive Probleme ergeben sich dann, wenn trotz der vorhandenen Dämmung eine leichte Zugänglichkeit zum Dämmobjekt, um z.B. Behälterschweißnähte zu überprüfen oder andere Revisionsarbeiten durchzuführen, gegeben sein muß.

Die Abstützung der Wärmedämmung gegen das Dämmobjekt umgebende bauliche Konstruktionen, wie z.B. Begehungsbühnen oder die umgebende Bauwerksstruktur, wie Decken und Wände, scheitert oft an der Möglichkeit, zusäztliche Lasten in diese Konstruktion einleiten zu können, insbesondere dann, wenn alle möglichen Belastungsfälle, wie Erdbeben und induzierte Erschütterungen, berücksichtigt werden müssen. Bei der Anstützung der Wärmedämmung gegen das Dämmobjekt umgebende bauliche Konstruktionen müssen wegen der unterschiedlichen Wärmeausdehnungen, die am Dämmobjekt, der Dämmung und den umgebenden Stützkonstruktionen auftreten, aufwendige Maßnahmen zum Dehnungsausgleich vorgesehen werden, wobei außerdem oft zu berücksichtigen ist, daß die Wärmedämmung Bewegungen des Dämmobjekts, wie z.B. Pendel- oder Schwingbewegungen, problemlos folgen können oder in der Lage sein muß, diese Bewegungen zu kompensieren und außerdem die aus diesen Bewegungen resultierenden Kräfte aufzunehmen.

Aus der DE-A-34 20 996 ist eine isolierende Auskleidung der Wandungen von Räumen, insbesondere in Öfen, bekannt, die die Merkmale des Oberbegriffs des Anspruchs 1 aufweist. Die Halterungskonstruktion dieser Dämmung umfaßt einen aus Profilschienen gebildeten Rahmen, der nahe dem oberen Ende von zu verkleidenden Seitenwänden der Räume um die Räume umlaufend angebracht ist. An dem Rahmen sind Seitenwandauskleidungen aufgehängt. Deckenwandauskleidungen sitzen auf dem Rahmen auf.

Es ist die Aufgabe der vorliegenden Erfindung, eine Wärmedämmung oder/und Schalldämmung mit einer Halterungskonstruktion zu schaffen, die eine Vielzahl von Anforderungen erfüllt und damit vielfältig einsetzbar ist.

Diese Aufgabe wird durch die im Anspruch 1 angegebenen Merkmale gelöst.

Durch diese erfindungsgemäße Lösung ist gewährleistet, daß die Wärmedämmung über ihre Halterungskonstruktion allein auf dem Dämmobjekt abgestützt ist und damit z.B. Bewegungen des Dämmobjekts problemlos folgen kann. Durch die Verwendung eines zentralen tragenden Teils, nämlich des Trägerrings, über den nahezu allein die Lasten der Dämmung auf dem Dämmobjekt angestützt werden, steht eine besonders einfache, kostengünstige und zur Lösung einer Vielzahl von Dämmproblemen geeignete Wärmedämmung oder/und Schalldämmung zur Verfügung.

In vorteilhafter Ausgestaltung der Erfindung ist der Trägerring mit sich im wesentlichen vertikal erstreckenden, mit ausgewählten Dämmelementen verbindbaren Halterungselementen verbunden. Durch solche, vorzugsweise stabförmig ausgebildete Halterungselemente ist es möglich, daß die Dämmwände bei Inspektionen nur teilweise demontiert werden müssen, indem verbleibende, durch die Entfernung von Dämmelementen nicht mehr abgestützte Dämmelemente durch die Halterungsstäbe gehaltert werden und ihre Last über die Halterungsstäbe in den Trägerring eingeleitet wird. Die stabförmigen, mit dem Trägerring verbundenen Halterungselemente können untereinander zur Verbesserung der Stabilität vorteilhaft mit das Dämmobjekt umgebenden Ringen verbunden sein, wobei die Halterungselemente und die Ringe das Dämmobjekt vorzugsweise in der Art eines Käfigs umgeben.

Weitere vorteilhafte Ausgestaltungsmöglichkeiten der Erfindung gehen aus den Unteransprüchen hervor.

Die Erfindung soll nun anhand von Ausführungsbeispielen und der sich auf diese Ausführungsbeispiele beziehenden beiliegenden Zeichnungen näher erläutert und beschrieben werden. Es zeigen:
- Fig.1: einen Behälter mit einer erfindungsgemäßen Wärmedämmung,
- Fig.2: das Ausführungsbeispiel gemäß der Fig. 1 für eine erfindungsgemäße Dämmung in einer Seitendarstellung (Abwicklung),
- Fig.3a: ein Ausführungsbeispiel für die Aufhängung eines erfindungsgemäßen Trägerrings an einem Dämmobjekt in einer Seitenansicht,
- Fig.3b: die Aufhängung gemäß der Fig. 3a in einer Vorderansicht,
- Fig.4a: ein Ausführungsbeispiel für die Verbindung eines Trägerrings mit einem Dämmelement aus einer Dämmwand unterhalb des Trägerrings in einer Seitenansicht,
- Fig.4b: das Ausführungsbeispiel gemäß der Fig. 4a in einer Vorderansicht,
- Fig.5a: ein Ausführungsbeispiel für eine Verbindung eines Trägerrings mit einem stabförmigen Halterungselement in einer Seitenansicht,
- Fig.5b: das Ausführungsbeispiel gemäß der Fig. 5a in einer Vorderansicht,
- Fig.6a: ein Ausführungsbeispiel für die Verbindung eines stabförmigen Halterungselements mit einem Dämmelement in einer Seitenansicht,
- Fig.6b: das stabförmige Halterungselement gemäß der Fig. 6a in einer Draufsicht,
- Fig.7: ein Ausführungsbeispiel für eine Verbindung eines stabförmigen Halterungselements mit einem mehrere stabförmige Halterungslemente verbindenden, das Dämmobjekt umgebenden Ring, und
- Fig.8: ein Ausführungsbeispiel für einen Trägerring.

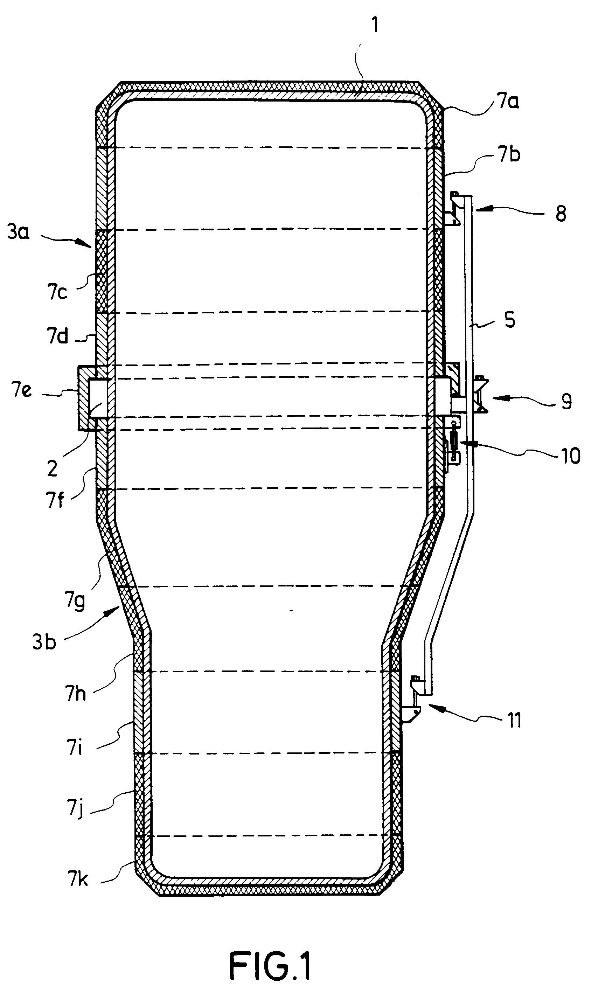

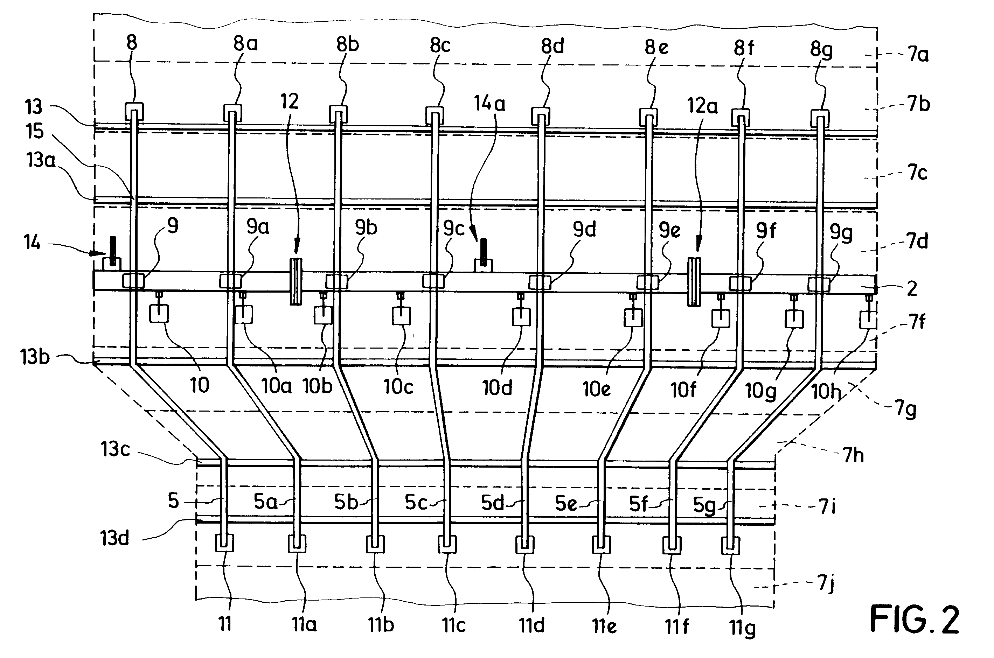

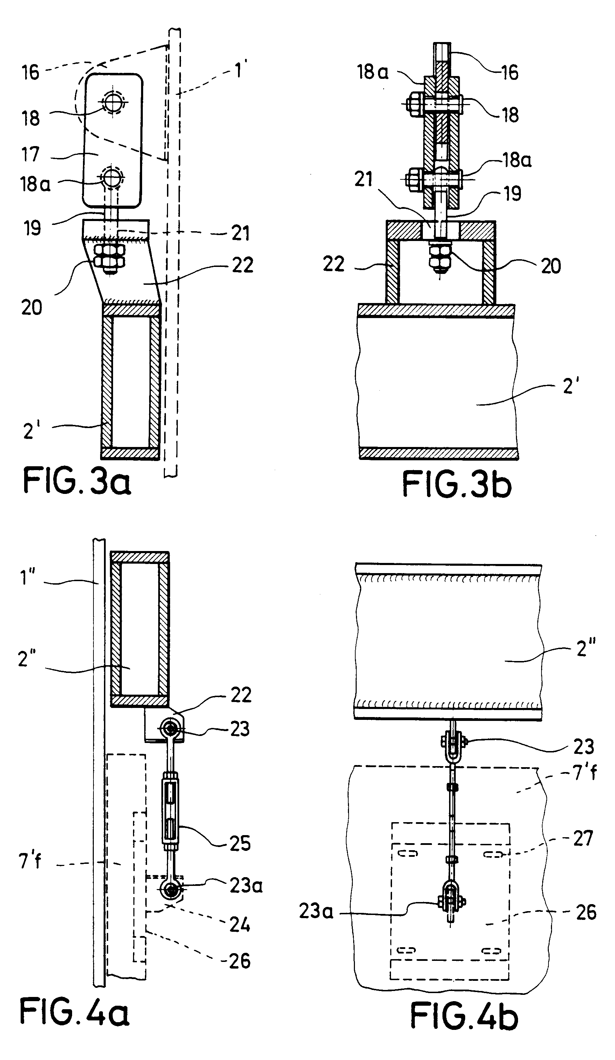

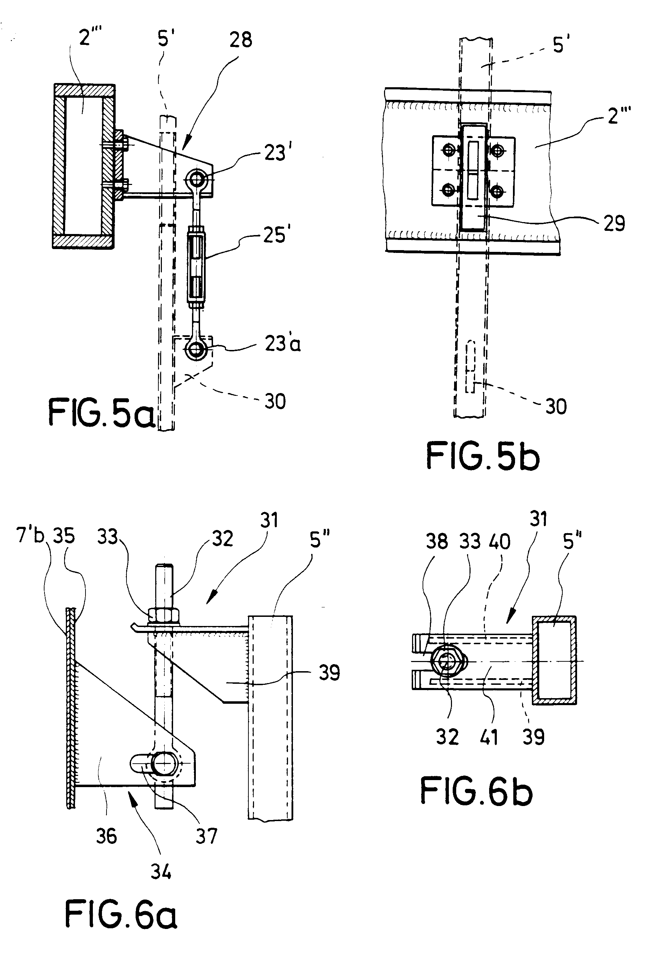

In der Fig. 1 ist mit dem Bezugszeichen 1 ein mit einer Wärmedämmung versehener Behälter bezeichnet, der von einem Trägerring 2 umgeben ist. Der Trägerring 2 ist über in der Fig. 1 nicht gezeigte Verbingungselemente an der Wand des Behälters 1 aufgehängt und die Innenseite des Trägerrings liegt im vorliegenden Ausführungsbeispiel an der Wand des Trägerrings an. Mit 3a ist eine oberhalb des Trägerrings angeordnete und mit dem Bezugszeichen 3b eine unterhalb des Trägerrings angeordnete, den Behälter umgebende Dämmwand bezeichnet. Die Dämmwände 3a und 3b bestehen aus Dämmelementen 7a bis 7d bzw. 7f bis 7k. Die Dämmelemente 7a und 7k bilden jeweils Kappen für die obere bzw. untere Endfläche des Behälters, während die Dämmelemente 7b bis 7d bzw. 7f bis 7j ringförmig ausgebildet sind, den Behältermantel umgeben und an der Behälterwand anliegen. Die einzelnen Dämmelemente sind untereinander an ihren Rändern durch in der Fig. 1 nicht dargestellte Schraubverbindungen miteinander verbunden. Die gezeigten Dämmelemente können ihrerseits aus miteinander verschraubbaren, plattenförmigen bzw. in der Form von Ringsegmenten ausgebildeten Elementen aufgebaut sein. Mit dem Bezugszeichen 5 ist ein stabförmiges mit dem Trägerring 2 über die Aufhängungsvorrichtung 9 verbundenes stabförmiges Halterungselement bezeichnet, das über eine Aufhängungsvorrichtung 8 mit dem Dämmelement 7b und über eine Aufhängungsvorrichtung 11 mit dem Dämmelement 7i verbunden ist. Im vorliegenden Ausführungsbeispiel sind, wie aus der Fig. 2 hervorgeht, über den Umfang des Behälters 1 verteilt, mehrere derartige Halterungsstäbe vorgesehen. Die Aufhängungsvorrichtungen 8, 9 und 11 werden später anhand der Fig. 5 und 6 genauer beschrieben. Mit 10 ist eine Aufhängungsvorrichtung bezeichnet, die den Trägerring 2 mit dem ringförmigen Dämmelement 7f unter dem Trägerring verbindet. Eine genauere Beschreibung dieser Aufhängungsvorrichtung erfolgt später anhand der Fig. 4a und 4b. Mit 7e ist in Fig. 1 ein im wesentlichen ringförmiges Dämmelement zur Dämmung des Bereiches über dem Trägerring bezeichnet. Das ringförmige Dämmelement weist z.B. im Bereich der Aufhängungen der Halterungsstäbe Ausnehmungen auf. Das Dämmelement kann auch mehrstückig ausgebildet sein und einzelne Ringsegmente umfassen.

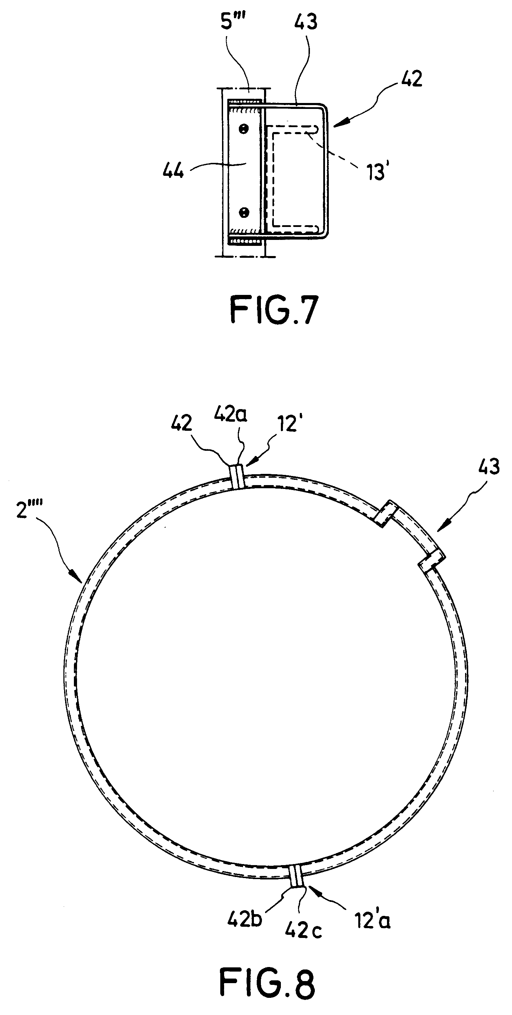

Der Fig. 2 ist zu entnehmen, daß über den Umfang des Behälters verteilt acht stabförmige Halterungselemente 5 bis 5g vorgesehen sind, die an ihrem oberen Ende über die Aufhängevorrichtungen 8 bis 8g mit dem Dämmelement 7b und an ihrem unteren Ende über die Aufhängevorrichtungen 11 bis 11g mit dem Dämmelement 7i, und über die Aufhängevorrichtungen 9 bis 9g mit dem Trägerring 2 verbunden sind. Wie weiterhin der Fig. 2 zu entnehmen ist, sind bei dem vorliegenden Ausführungsbeispiel neun Aufhängungsvorrichtungen 10 bis 10h vorgesehen, über die das Dämmelement 7f mit dem Trägerring 2 verbunden ist. Der im vorliegenden Ausführungsbeispiel verwendete Trägerring besteht aus zwei Segmenten, die an den Stellen 12 und 12a über Flanschverbindungen, miteinander verbunden, vorzugsweise verschraubt, sind. Die Flansche können über Dehnungselemente, z.B. Schraubenfedern, miteinander verbunden sein. Der Trägerring ist im vorliegenden Ausführungsbeispiel durch zwei Aufhängungsvorrichtugen 14 und 14a mit der Wand des Behälters 1 verbunden. Mögliche Ausführungsbeispiele für Aufhängungsvorrichtungen 14 und 14a werden später anhand der Fig. 3 genauer erläutert. An den Aufhängestellen weist das Dämmelement 7d entsprechende, in der Fig. 2 jedoch nicht gezeigte Aussparungen auf. Zur Dämmung des Bereichs der Aufhängungen können gesonderte Dämmelemente verwendet werden, die, wie auch das Dämmelement 7e gemäß Fig. 1, in der Fig. 2 nicht dargestellt sind. Mit den Bezugszeichen 13 bis 13d sind in der Fig. 2 den Behälter 1 umgebende Ringe bezeichnet, durch die die Halterungsstäbe 5 bis 5g untereinander verbunden sind. Eine der Verbindungsstellen ist beispielsweise mit 15 bezeichnet. Ein Ausführungsbeispiel für die Ausbildung einer solchen Verbindung wird später genauer anhand der Fig. 7 beschrieben. Die Halterungsstäbe 5 bis 5g und die mit ihnen verbundenen Ringe 13 bis 13d umgeben einen Teil der Behälterwand in der Art eines Käfigs.

In den Fig. 3a und 3b, in denen ein Ausführungsbeipiel für eine Aufhängungsvorrichtung des Trägerrings 2' an der Wand eines zu dämmenden Behälters gezeigt ist, ist mit dem Bezugszeichen 16 ein aus der Behälterwand vorstehendes Teil bezeichnet, das eine Bohrung enthält und eine Öse für die Aufhängung eines Verbindungsstücks 17 zwischen dem Behälter und dem Trägerring bildet. Das Verbindungsstück 17 ist durch ein paar von einander gegenüberliegenden Platten, die jeweils zwei Bohrungen aufweisen, gebildet, wobei durch die oberen Bohrungen 18 eine Schraubverbindung mit dem vorstehenden Teil 16 herstellbar und durch die untere Bohrung 18a ein verschraubbarer Bolzen steckbar ist, der zwischen den Platten eine Lagerung für einen verschwenkbaren Stift 19, mit dem der Bolzen verbunden ist, bildet. Der verschwenkbare Stift 19 tritt durch ein in einer mit dem Trägerring 2' verbundenen Konsole 22 ausgebildetes Langloch 21 hindurch und weist an seinem unteren Ende ein Gewinde auf, auf das Muttern 20 aufschraubbar sind, über die der als Aufhängungsbolzen verwendete Stift mit der Konsole verbindbar ist. Dabei liegt ein horizontaler Teil der Konsole auf einer der aufgeschraubten Muttern 20 auf. Durch die verschwenkbar vorgesehene Verbindung zwischen dem vorstehenden Teil 16 und dem Trägerring 2' können unterschiedliche Wärmeausdehnungen zwischen Ring und Behälterwand ausgeglichen werden. Indem der horizontale Teil der Konsole auf einer der Muttern 20 nur aufliegt, sind auch vertikale Bewegungen des Rings relativ zur Behälterwand möglich. Indem die Bohrung 21 als Langloch vorgesehen ist, können auch z.B. wärmeausdehnungsbedingte Relativbewegungen des Trägerrings tangential zur Behälterwand ausgeglichen werden, so daß drei Freiheitsgrade für Bewegungen des Rings bestehen. Durch das am unteren Ende des verschwenkbaren Stifts 19 vorgesehene Gewinde bestehen Verstellmöglichkeiten, durch die der Trägerring bei der Montage in seiner Lage justierbar ist. Wie der Fig. 3a entnommen werden kann, ist die Konsole nach oben schräg von der Behälterwand weg verlaufend vorgesehen, um dadurch zusätzlichen Bewegungsspielraum zu gewinnen.

In den Fig. 4a und 4b, in denen eine Aufhängungsvorrichtung für ein Dämmsegment 7f' an einem Trägerring 2'' gezeigt ist, sind mit 22 und 24 plattenförmige Konsolen mit je einer Bohrung zur Herstellung einer Schraubverbindung mit einem Bolzen 25 bezeichnet. Zwischen den Konsolen ist eine Verbindung durch den Bolzen 25, der in seiner Länge verstellbar ist, hergestellt. Die obere Konsole 22 ist mit dem Trägerring 2'' verbunden, vorzugsweise verschweißt, während die untere Konsole 24 mit einer Platte 26 verbunden, vorzugsweise verschweißt, ist. Die Platte 26 ist mit der Blechwand eines im vorliegenden Ausführungsbeispiel als Blechkassette mit einer Dämmstoffüllung ausgebildeten Dämmelements 7f' verbunden. Die Platte ist mit der Blechwand verschraubt, wozu vier Langlöcher vorgesehen sind, von denen ein Langloch beispielsweise mit 27 bezeichnet ist. Durch die Verwendung von Langlöchern ist gewährleistet, daß durch Wärmeausdehnungen bedingte Relativbewegungen der Platte zum Dämmelement möglich sind. Wie der Fig. 4b entnommen werden kann, ist der verstellbare Bolzen an seinen Enden gegabelt und die Konsolen 22 und 24 stehen in den Zwichenraum zwischen den Gabelschenkeln hinein. Der verlängerbare Bolzen ist an seinen Verbindungsstellen mit den Konsolen 22 und 24 verschwenkbar, so daß entsprechende Relativbewegungen zwischen dem an dem Behälter 1'' aufgehängten Trägerring 2'' und dem Dämmelement 7f' möglich sind. Durch Vorsehen von Langlöchern in wenigstens einer der Konsolen können auch vertikale Verschiebebewegungen des Dämmelements 7f' und des Trägerrings 2'' zueinander, wie sie unter den vielfältigen Belastungseinflüssen, denen die Haltekonstruktion ausgesetzt sein kann, auftreten können, ermöglicht werden. Durch die Verstellbarkeit der Länge des Bolzens 25 sind bei der Montage der Dämmung vorteilhaft Fertigungstoleranzen ausgleichbar.

In den Fig. 5a und 5b, in denen ein Ausführungsbeispiel für eine in der Fig. 1 mit dem Bezugszeichen 9 bezeichnete Aufhängung dargestellt ist, ist mit 28 eine mit einem Trägerring 2''', der wie in den vorangegangenen Ausführungsbeispielen im Querschnitt ein Rechteckprofil aufweist, verbundene Konsole bezeichnet. Die Konsole 28 weist eine Grundplatte auf, über die sie mit dem Trägerring 2''' verschraubt ist. Aus der Grundplatte steht senkrecht ein Schenkel mit einer Bohrung 23' vor. Der vorstehende Schenkel ist durch eine Ausnehmung 29 in einem stabförmigen Halterungselement 5' hindurch geführt. Das Halterungselement 5' weist eine plattenförmige Konsole 30 mit einer Bohrung 23a' auf. Die Bohrungen 23' und 23a' dienen zur Herstellung von Schraubverbindungen zu einem in seiner Länge verstellbaren Bolzen 25', der die Konsolen 28 und 30 miteinander verbindet. In der Fig. 5b ist der Bolzen 25' nicht dargestellt. Indem der Bolzen 25' in seiner Länge verstellbar ist, können bei der Montage der Dämmung vorteilhaft Fertigungstoleranzen ausgeglichen werden. Der um seine Verbindungsstellen verschwenkbare Bolzen ermöglicht, z.B. durch Wärmeausdehnungen bedingte, Bewegungen des Halterungselements 5' relativ zur Behälteroberfläche. Die Bohrungen 23' und 23a' können als Langlöcher vorgesehen werden, wobei, um möglichst viele Bewegungsmöglichkeiten zu erhalten, ein Langloch vertikal und ein Langloch horizontal ausgebildet sein könnte.

In den Fig. 6a und 6b, in denen ein Ausführungsbeispiel für die in der Fig. 1 mit 8 bezeichnete Aufhängung dargestellt ist, bezeichnet 5'' ein stabförmiges Halterungselement mit einem Rechteckrohrquerschnitt, das an seinem oberen Ende mit einer Konsole 31 verbunden, vorzugsweise verschweißt, ist. Die Konsole 31 weist eine vertikale längliche Platte 41 auf, die an ihrem von dem Halterungselement 5'' abgewandten Ende eine seitliche Ausnehmung 38 aufweist. Die Konsole 31 ist darüber hinaus mit zwei zu der länglichen Platte 41 senkrechten, plattenförmigen Stützschenkeln 39 und 40 versehen. Mit 34 ist eine einen vorstehenden plattenförmigen Schenkel 36 mit einem Langloch 37 und eine Grundplatte 35 umfassende Konsole bezeichnet, die mit der Blechwand eines als Blechkassette mit einer Dämmstoffüllung ausgebildeten Dämmelements 7b' verbunden, verzugsweise verschraubt, ist. Zwischen der Konsole 31 und der Konsole 34 ist eine Verbindung durch einen Bolzen bzw. Stift 32 hergestellt, der an seinem oberen Ende ein Gewinde aufweist, auf das eine Mutter 33 aufschraubbar ist. Der Bolzen ist in die seitliche Ausnehmung 38 der länglichen Platte 41 eingeführt, wobei die Mutter 33 auf der länglichen Platte aufliegt. Zwischen der vorstehenden Platte 36 der Konsole 34 und dem Bolzen 32 ist eine Schraubverbindung hergestellt, wobei eine Schraube durch das Langloch 37 geführt ist. Indem der Bolzen 32 in der seitlichen Ausnehmung 38 und in dem Langloch 37 beweglich ist, ist durch diese Art der Aufhängung gesichert, daß z.B. durch Wärmeausdehnung bedingte Bewegungen des Dämmelements 7b' relativ zu dem Halterungselement ausgleichbar sind. Die in der Fig. 1 mit 11 bezeichnete Aufhängung entspricht im wesentlichen der vorangehend in diesem Abschnitt beschriebenen Aufhängung 8.

In der Fig. 7, in der ein Ausführungsbeispiel für eine Verbindung zwischen einem stabförmigen Halterungselement 53' und einem mehrere Halterungselemente untereinander verbindenden Ring 13' dargestellt ist, ist mit 42 ein Verbindungselement bezeichnet, das eine vorzugsweise durch Verschrauben mit dem Halterungselement 5''' verbindbare Grundplatte 44 und einen mit der Grundplatte verschweißten Bügel 43 umfaßt. Der Bügel 42 umgreift den Ring 13', der dadurch zwischen dem stabförmigen Halterungselement 5''' und dem Bügel eingeschlossen ist. Der Ring 13' weist im vorliegenden Ausführunsbeispiel einen u-förmigen Querschnitt auf, es könnten jedoch auch Ringe mit anderen Querschnittsformen zur Anwendung kommen. Der Bügel ist in seinen Abmessungen so ausgebildet, daß der Ring darin einen bestimmten Bewegungsspielraum hat, um durch Wärmeeinflüsse bedingte Bewegungen zwischen Ring und Halterungselement ausgleichen zu können.

Die Fig. 8 zeigt ein Ausführungsbeipiel für einen mit 2'''' bezeichneten Trägerring. Der Trägerring weist, wie bei den vorangehend gezeigten Ausführungsbeispielen, im Querschnitt das Profil eines Rechteckrohrs auf. Der Trägerring besteht aus zwei Segmenten, die an den Verbindungsstellen 12' und 12a' zusammengefügt sind. An den Segmentenden sind Flansche 42 bis 42c vorgesehen, über die zwischen den Segmenten insbesondere eine Schraubverbindung herstellbar ist. Zwischen den Flanschen können insbesondere dann, wenn der Ring unmittelbar auf der Oberfläche des Behälters aufliegt und ein Wärmedehnungsausgleich zwischen Ring und Behälter erforderlich ist, Ausgleichselemente vorgesehen sein, so daß die Verbindung zwischen den Flanschen durch diese in ihrer Länge veränderbaren Ausgleichselemente gegeben ist. Solche Ausgleichselemente können z.B. Schraubenfedern mit Endplatten, die mit den Flanschen verbindbar sind, sein. Im Gegensatz zu dem hier dargestellten Ausführungsbeispiel könnte der Ring auch aus einer größeren Anzahl von Segmenten bestehen oder einstückig ausgebildet sein. Mit 43 ist eine Umbuchtung bezeichnet, durch die gewährleistet ist, daß die Oberfläche des Behälters unter dem Ring an der entsprechenden Stelle zugänglich ist. Derartige Umbuchtungen können z.B. über den Ring unterlaufenden Schweißnähten vorgesehen werden, die in bestimmten Zeitabständen überprüft werden müssen.

Wie den Fig. 1 und 2 zu entnehmen ist, wird die Last der Dämmwand 3a oberhalb des Trägerrings weitgehend durch den Trägerring abgetragen, indem die miteinander verbundenen, die Dämmwand 3 bildenden Dämmelemente 7a bis 7d auf dem Trägerring aufsitzen bzw. über die Halterungselemente 5 bis 5g mit dem Trägerring verbunden sind. Die Last des Dämmelements 7a wird weitgehend durch die obere Endfläche des Behälters 1 abgetragen. Die Last der Dämmwand 3b, die aus den Segmenten 7f bis 7k gebildet ist, wird vollständig über die Aufhängungen 10 bis 10h und die Halterungselemente 5 bis 5g in den Trägerring 2 eingeleitet.

Die erfindungsgemäße Dämmung mit der Halterungskonstruktion ist äußerst flexibel. Der Trägerring 2 könnte in verschiedenen Höhen angebracht werden und es könnten bei entsprechender vertikaler Ausdehung des Dämmobjektes zwei oder noch mehr Trägerringe vorgesehen werden. Bei dem in den Fig. 1 und 2 dargestellten Ausführungsbeispiel sind jeweils nur ein oberes und ein unteres Dämmelement mit den stabförmigen Halterungselementen verbunden. Es könnten aber noch weitere Dämmelemente mit derartigen Halterungselementen verbunden sein und die Halterungselemente selbst könnten bei entsprechender Länge des Dämmobjektes länger, als im vorliegenden Ausführungsbeispiel gezeigt, vorgesehen werden.

Die gezeigte Halterungskonstruktion für eine Wärmedämmung mit den stabförmigen Halterungselementen hat den Vorteil, daß zur Gewährleistung der Zugänglichkeit zur Oberfläche des Dämmobjektes Dämmelemente entfernt werden können, wobei eine statische Halterung der verbleibenden Dämmelemente gesichert bleibt. Indem diese Halterungselemente montiert bleiben können, verringert sich vorteilhaft der für Wartungs- und Inspektionsarbeiten erforderliche Aufwand. Im vorliegenden Ausführungsbeispiel können z.B. die Dämmelemente 7c, 7g und 7h abgenommen werden, wobei die Halterung der verbleibenden Segmente 7a und 7b bzw. 7i bis 7k gewährleistet bleibt, weil die Last dieser Elemente dann ausschließlich über die Halterungselemente 5 bis 5 g in den Trägerring 2 einleitbar ist. Indem die Halterungselemente untereinander durch die Ringe verbunden sind, ist eine weitgehend symmetrische Krafteinleitung gewährleistet. Im vorliegenden Fall ist eine gewisse Abstützung des Halterungselement 7b auch durch die Verbindung mit dem weitgehend auf der oberen Endfläche des Behälters abgetragenen Deckelements 7a gegeben. Die Erfindungsgemäße Halterung wäre natürlich auch dann verwendbar, wenn ein solches Deckelement, wie das Dämmelement 7a, gar nicht vorgesehen und nur eine Dämmung auf dem Mantelumfang des Behälters angebracht wäre.

Ein besonderer Vorteil der erfindungsgemäßen Dämmung mit der Halterungskonstruktion besteht in der großen Flexibilität in bezug auf die Höhe, in der der Trägerring angebracht werden kann, so daß zur Halterung des Trägerrings unter Umständen zufällig an der Oberfläche des Dämmobjekts vorhandene Ösen oder verspringende Teile zur Abstützung des Trägerrings nutzbar sind. Der Trägerring braucht nicht notwendig, wie im vorliegenden Ausführungsbeipiel gezeigt, an dem Dämmobjekt aufgehängt zu werden, sondern er kann auch auf aus der Wand des Dämmobjekts vorstehenden Vorsprüngen aufliegen.

Der Trägerring braucht nicht, wie im vorliegenden Ausführungsbeispiel, als an der Wand des Dämmobjekts anliegende Warmkonstruktion ausgeführt, sondern er kann auch als von dem Dämmobjekt beabstandete Kaltkonstruktion vorgesehen sein. Je nach Anforderungen an die Haltekonstruktion können sich dadurch Vorteile in bezug auf die Materialauswahl ergeben.

Sofern zur Oberfläche des Dämmobjekts beabstandete Dämmwände vorgesehen werden, wäre es auch denkbar, die stabförmigen, den gedämmten Behälter zusammen mit den Ringen in der Art eines Käfigs umgebenden Halterungsstangen unter der Dämmwand, d.h. also zwischen der Behälterwand und der Dämmwand vorzusehen.

Indem die Verbindungen zwischen den Komponenten der Konstruktion in der beschriebenen Weise flexibel vorgesehen werden, können vorteilhaft Relativbewegungen zwischen den Elementen, die sich bedingt durch unterschiedliche Temperaturen oder andere Belastungseinflüsse ergeben, vorteilhaft abgefangen werden und bei der Montage der Halterungskonstruktion bestehen vielfältige Möglichkeiten, Fertigungstoleranzen der einzelnen die Dämmung bildenden Elemente auszugleichen.

## Patentansprüche

1. Wärmedämmung oder/und Schalldämmung mit einer an einem Dämmobjekt (1) angebrachten Halterungskonstruktion, die wenigstens einen durch das Dämmobjekt (1) gehalterten Trägerring (2) zur Halterung einer das Dämmobjekt oberhalb des Trägerrings isolierenden, von dem Trägerring getragenen oberen Dämmwand (3a) und einer das Dämmobjekt unterhalb des Trägerrings isolierenden, an dem Trägerring aufgehängten unteren Dämmwand (3b) aufweist,
**dadurch gekennzeichnet,**
daß der Trägerring (2) das Dämmobjekt (1) als Außenring umgibt,
daß die obere (3a) und untere (3b) Dämmwand das Dämmobjekt als Außenverkleidung umgeben, und
daß sich ein wesentlicher Teil der oberen Dämmwand (3a) im wesentlichen vertikal über dem Trägerring erstreckt.

2. Wärmedämmung oder/und Schalldämmung mit einer an einem Dämmobjekt (1) angebrachten Halterungskonstruktion nach Anspruch 1, **dadurch gekennzeichnet,** daß der Trägerring (2) an dem Dämmobjekt (1) an wenigstens einem Hängepunkt aufgehängt ist.

3. Wärmedämmung oder/und Schalldämmung mit einer an einem Dämmobjekt (1) angebrachten Halterungskonstruktion nach Anspruch 2, **dadurch gekennzeichnet,** daß die Aufhängung des Trägerrings (2) am Dämmobjekt (1) eine mit dem Trägerring verbundene Bügelkonsole (22), einen mit der Bügelkonsole verbundenen Aufhängungsbolzen (19), und ein Paar von einander gegenüberliegend angeordneten Befestigungsplatten (17) mit jeweils zwei Bohrungen (18, 18a) umfaßt, wobei in einen Zwischenraum zwischen den Befestigungsplatten der Aufhängungsbolzen (19) und eine mit dem Dämmobjekt verbundene Öse (16) hineinsteht und zwischen dem Aufhängungsbolzen und dem Plattenpaar (17) sowie zwischen dem Plattenpaar (17) und der Öse (16) eine Schraubverbindung mit durch die Bohrungen (18, 18a) geführten Schrauben hergestellt ist.

4. Wärmedämmung oder/und Schalldämmung mit einer an einem Dämmobjekt (1) angebrachten Halterungskonstruktion nach Anspruch 3, **dadurch** **gekennzeichnet,** daß der Aufhängungsbolzen an seinem unteren Ende ein Gewinde, auf das eine Mutter (20) aufschraubbar ist, aufweist.

5. Wärmedämmung oder/und Schalldämmung mit einer an einem Dämmobjekt (1) angebrachten Halterungskonstruktion nach Anspruch 3 oder 4, **dadurch gekennzeichnet,** daß der Aufhängungsbolzen (19) in ein in einem horizontalen, gegen die Mutter (20) zur Anlage kommenden Teil der Bügelkonsole ausgebildetes Langloch (21) eingreift.

6. Wärmedämmung oder/und Schalldämmung mit einer an einem Dämmobjekt (1) angebrachten Halterungskonstruktion nach Anspruch 1, **dadurch gekennzeichnet,** daß der Trägerring (2) durch das Dämmobjekt (1) an wenigstens einem Stützpunkt abgestützt ist.

7. Wärmedämmung oder/und Schalldämmung mit einer an einem Dämmobjekt (1) angebrachten Halterungskonstruktion nach einem der Ansprüche 1 bis 6, **dadurch gekennzeichnet,** daß der Trägerring (2) an dem Dämmobjekt (1) formschlüssig anliegt.

8. Wärmedämmung oder/und Schalldämmung mit einer an einem Dämmobjekt (1) angebrachten Halterungskonstruktion nach einem der Ansprüche 1 bis 7, **dadurch gekennzeichnet,** daß der Trägerring (2) wenigstens eine einen Zugang zur Oberfläche des Dämmobjekts (1) gewährleistende Umbuchtung (43) aufweist.

9. Wärmedämmung oder/und Schalldämmung mit einer an einem Dämmobjekt (1) angebrachten Halterungskonstruktion nach einem der Ansprüche 1 bis 8, **dadurch gekennzeichnet,** daß der Trägerring (2) wenigstens ein Ausgleichselement für den Ausgleich von Wärmedehnungen aufweist.

10. Wärmedämmung oder/und Schalldämmung mit einer an einem Dämmobjekt (1) angebrachten Halterungskonstruktion nach einem der Ansprüche 1 bis 9, **dadurch gekennzeichnet,** daß der Trägerring (2) mehrere Segmente aufweist.

11. Wärmedämmung oder/und Schalldämmung mit einer an einem Dämmobjekt (1) angebrachten Halterungskonstruktion nach Anspruch 10, **dadurch gekennzeichnet,** daß das wenistens eine Ausgleichselement zwischen zwei aneinander stoßenden Enden zweier Ringsegmente vorgesehen ist.

12. Wärmedämmung oder/und Schalldämmung mit einer an einem Dämmobjekt (1) angebrachten Halterungskonstruktion nach einem der Ansprüche 9 bis 11, **dadurch gekennzeichnet,** daß das Ausgleichselement wenigstens eine Feder umfaßt.

13. Wärmedämmung oder/und Schalldämmung mit einer an einem Dämmobjekt (1) angebrachten Halterungskonstruktion nach einem der Ansprüche 1 bis 12, **dadurch gekennzeichnet,** daß der Trägerring (2) als zwischen einer Ringaußendämmung (7e) und dem Dämmobjekt (1) angeordnete Warmkonstruktion vorgesehen ist.

14. Wärmedämmung oder/und Schalldämmung mit einer an einem Dämmobjekt (1) angebrachten Halterungskonstruktion nach einem der Ansprüche 1 bis 6 sowie 8 bis 13, **dadurch gekennzeichnet,** daß der Trägerring (2) als zu dem Dämmobjekt (1) beabstandete Kaltkonstruktion vorgesehen ist.

15. Wärmedämmung oder/und Schalldämmung mit einer an einem Dämmobjekt (1) angebrachten Halterungskonstruktion nach einem der Ansprüche 1 bis 14, **dadurch gekennzeichnet,** daß die Aufhängung der Dämmwand (3b) an dem Trägerring (2) einen Verbindungsbolzen (25) umfaßt, der mit an dem Trägerring (2) und der Dämmwand (3b) vorgesehenen Befestigungskonsolen (23, 24) verbunden ist.

16. Wärmedämmung oder/und Schalldämmung mit einer an einem Dämmobjekt (1) angebrachten Halterungskonstruktion nach Anspruch 15, **dadurch gekennzeichnet,** daß zwischen dem Verbindungsbolzen (25) und den Konsolen (23, 24) eine Schraubverbindung hergestellt ist.

17. Wärmedämmung oder/und Schalldämmung mit einer an einem Dämmobjekt (1) angebrachten Halterungskonstruktion nach Anspruch 16, **dadurch gekennzeichnet,** daß die Schraubverbindung an wenigstens einem Ende des Verbindungsbolzens (25) eine durch ein Langloch geführte Schraube aufweist.

18. Wärmedämmung oder/und Schalldämmung mit einer an einem Dämmobjekt (1) angebrachten Halterungskonstruktion nach einem der Ansprüche 1 bis 17, **dadurch gekennzeichnet,** daß die Dämmwände (3a, 3b) durch miteinander verbindbare Dämmelemente (7) gebildet sind.

19. Wärmedämmung oder/und Schalldämmung mit einer an einem Dämmobjekt (1) angebrachten Halterungskonstruktion nach Anspruch 18, **dadurch gekennzeichnet,** daß die Dämmelemente (7) als mit einem Dämmaterial gefüllte Blechkassetten ausgebildet sind.

20. Wärmedämmung oder/und Schalldämmung mit einer an einem Dämmobjekt (1) angebrachten Halterungskonstruktion nach einem der Ansprüche 18 oder 19, **dadurch gekennzeichnet,** daß die Dämmelemente (7) durch Schraubverbindungen miteinander verbindbar sind.

21. Wärmedämmung oder/und Schalldämmung mit einer an einem Dämmobjekt (1) angebrachten Halterungskonstruktion nach einem der Ansprüche 18 bis 20, **dadurch gekennzeichnet,** daß die Dämmelemente (7) ringförmig oder ringsegmentförmig ausgebildet sind.

22. Wärmedämmung oder/und Schalldämmung mit einer an einem Dämmobjekt (1) angebrachten Halterungskonstruktion nach einem der Ansprüche 1 bis 21, **dadurch gekennzeichnet,** daß der Trägerring (1) mit sich im wesentlichen vertikal erstreckenden, mit ausgewählten Dämmelementen (7b, 7i) verbindbaren Halterungselementen (5) verbunden ist.

23. Wärmedämmung oder/und Schalldämmung mit einer an einem Dämmobjekt (1) angebrachten Halterungskonstruktion nach Anspruch 22, **dadurch gekennzeichnet,** daß die Halterungselemente (5) stabförmig ausgebildet sind.

24. Wärmedämmung oder/und Schalldämmung mit einer an einem Dämmobjekt (1) angebrachten Halterungskonstruktion nach Anspruch 22 oder 23, **dadurch gekennzeichnet,** daß die Halterungselemente zur Verbindung mit den Dämmelementen mit Konsolen (31) verbunden sind, die eine seitliche Einschlitzung (38) aufweisen, in die ein Verbindungsstift (32) zum Einhängen einschiebbar ist.

25. Wärmedämmung oder/und Schalldämmung mit einer an einem Dämmobjekt (1) angebrachten Halterungskonstruktion nach Anspruch 24, **dadurch gekennzeichnet,** daß der Verbindungsstift (32) an seinem unteren Ende mit einem mit dem Dämmelement (7b') verbundenen Befestigungselement (34) verbindbar ist.

26. Wärmedämmung oder/und Schalldämmung mit einer an einem Dämmobjekt (1) angebrachten Halterungskonstruktion nach Anspruch 25, **dadurch** **gekennzeichnet,** daß die Verbindung mit dem Befestigungselement (34) durch eine durch ein Langloch (37) geführte Schraube hergestellt ist.

27. Wärmedämmung oder/und Schalldämmung mit einer an einem Dämmobjekt (1) angebrachten Halterungskonstruktion nach einem der Ansprüche 22 bis 26, **dadurch gekennzeichnet,** daß die Verbindung zwischen dem Halterungselement (5) und dem Trägerring (2) durch eine mit dem Trägerring (2) und eine mit dem Halterungselement (5) verbundene Konsole (28, 30) und einen zwischen den Konsolen (28, 30) angeordneten Verbindungsbolzen (25') hergestellt ist.

28. Wärmedämmung oder/und Schalldämmung mit einer an einem Dämmobjekt (1) angebrachten Halterungskonstruktion nach Anspruch 27, **dadurch gekennzeichnet,** daß zwischen den Konsolen (28, 30) und dem Verbindungbolzen (25') eine Schraubverbindung hergestellt ist.

29. Wärmedämmung oder/und Schalldämmung mit einer an einem Dämmobjekt (1) angebrachten Halterungskonstruktion nach Anspruch 28, **dadurch gekennzeichnet,** daß die Schraubverbindung an wenigstens einem Ende des Verbindungsbolzens (25') eine durch ein Langloch geführte Schraube umfaßt.

30. Wärmedämmung oder/und Schalldämmung mit einer an einem Dämmobjekt (1) angebrachten Halterungskonstruktion nach einem der Ansprüche 15 bis 29, **dadurch gekennzeichnet,** daß der Verbindungsbolzen (25, 25') in seiner Länge verstellbar ist.

31. Wärmedämmung oder/und Schalldämmung mit einer an einem Dämmobjekt (1) angebrachten Halterungskonstruktion nach einem der Ansprüche 22 bis 30, **dadurch gekennzeichnet,** daß die Halterungselemente (5) untereinander durch wenigstens einen, das Dämmobjekt umgebenden Ring (13) verbunden sind.

32. Wärmedämmung oder/und Schalldämmung mit einer an einem Dämmobjekt (1) angebrachten Halterungskonstruktion nach Anspruch 31**, dadurch gekennzeichnet,** daß Ringe (13) und Halterungselemente (5) derart vorgesehen sind, daß das Dämmobjekt von den Ringen und Halterungselementen in der Art eines Käfigs umgeben ist.

33. Wärmedämmung oder/und Schalldämmung mit einer an einem Dämmobjekt (1) angebrachten Halterungskonstruktion nach Anspruch 31 oder 32, **dadurch gekennzeichnet,** daß die Ringe (13) mit den Halterungselementen (5) durch den Ringquerschnitt (13') umgreifende Bügel (43) verbunden sind.

34. Wärmedämmung oder/und Schalldämmung mit einer an einem Dämmobjekt (1) angebrachten Halterungskonstruktion nach Anspruch 33**, dadurch gekennzeichnet,** daß in dem Bügel (43) ein Bewegungsspielraum für den Ring (131) vorgesehen ist.

35. Wärmedämmung oder/und Schalldämmung mit einer an einem Dämmobjekt (1) angebrachten Halterungskonstruktion nach einem der Ansprüche 22 bis 34, **dadurch gekennzeichnet,** daß die Halterungselemente (5) an ihrem oberen und unteren Ende mit den Dämmelementen (7b, 7i) verbunden sind.

36. Wärmedämmung oder/und Schalldämmung mit einer an einem Dämmobjekt (1) angebrachten Halterungskonstruktion nach einem der Ansprüche 22 bis 35, **dadurch gekennzeichnet,** daß die Dämmwände (3a, 3b) zwischen dem Dämmobjekt (1) und den Halterungselementen (5) angeordnet sind.

37. Wärmedämmung oder/und Schalldämmung mit einer an einem Dämmobjekt (1) angebrachten Halterungskonstruktion nach einem der Ansprüche 27 bis 36, **dadurch gekennzeichnet,** daß die mit dem Trägerring (2''') verbundene Konsole (28) durch eine Ausnehmung (29) in dem Halterungselement (5') geführt ist.

## Claims

1. Heat insulation and/or sound insulation with a supporting structure which is mounted on an object of insulation (1) and comprises at least one carrier ring (2) supported by the object of insulation (1) for supporting an upper insulating wall (3a) insulating the object of insulation above the carrier ring and carried by the carrier ring, and a lower insulating wall (3b) insulating the object of insulation below the carrier ring and suspended from the carrier ring, characterised in that the carrier ring (2) surrounds the object of insulation (1) as an outer ring, in that the upper (3a) and lower (3b) insulating walls surround the object of insulation as an outer jacket, and in that a substantial portion of the upper insulating wall (3a) extends essentially vertically over the carrier ring.

2. Heat insulation and/or sound insulation with a supporting structure which is mounted on an object of insulation (1) according to claim 1, characterised in that the carrier ring (2) is suspended from the object of insulation (1) at at least one point of suspension.

3. Heat insulation and/or sound insulation with a supporting structure which is mounted on an object of insulation (1) according to claim 2, characterised in that the suspension of the carrier ring (2) from the object of insulation (1) includes a U-shaped bracket (22) connected to the carrier ring, a suspension bolt (19) connected to the U-shaped bracket, and a pair of fixing plates (17) arranged opposite each other with two bores (18, 18a) each, wherein the suspension bolt (19) and an eye (16) connected to the object of insulation extend into a gap between the fixing plates, and between the suspension bolt and the pair of plates (17) as well as between the pair of plates (17) and the eye (16) a screw joint is made with screws passing through the bores (18, 18a).

4. Heat insulation and/or sound insulation with a supporting structure which is mounted on an object of insulation (1) according to claim 3, characterised in that the suspension bolt comprises at its lower end a thread onto which a nut (20) can be screwed.

5. Heat insulation and/or sound insulation with a supporting structure which is mounted on an object of insulation (1) according to claim 3 or 4, characterised in that the suspension bolt (19) engages in an oblong hole (21) formed in a horizontal portion of the U-shaped bracket which comes into contact with the nut (20).

6. Heat insulation and/or sound insulation with a supporting structure which is mounted on an object of insulation (1) according to claim 1, characterised in that the carrier ring (2) is supported by the object of insulation (1) at at least one supporting point.

7. Heat insulation and/or sound insulation with a supporting structure which is mounted on an object of insulation (1) according to any of claims 1 to 6, characterised in that the carrier ring (20) abuts against the object of insulation (1) in form-locking relationship.

8. Heat insulation and/or sound insulation with a supporting structure which is mounted on an object of insulation (1) according to any of claims 1 to 7, characterised in that the carrier ring (2) comprises at least one surrounding portion (43) ensuring access to the surface of the object of insulation (1).

9. Heat insulation and/or sound insulation with a supporting structure which is mounted on an object of insulation (1) according to any of claims 1 to 8, characterised in that the carrier ring (2) comprises at least one compensating element for compensation for thermal expansion.

10. Heat insulation and/or sound insulation with a supporting structure which is mounted on an object of insulation (1) according to any of claims 1 to 9, characterised in that the carrier ring (2) comprises several segments.

11. Heat insulation and/or sound insulation with a Supporting structure which is mounted on an object of insulation (1) according to claim 10, characterised in that the at least one compensating element is provided between two butting ends of two ring segments.

12. Heat insulation and/or sound insulation with a supporting structure which is mounted on an object of insulation (1) according to any of claims 9 to 11, characterised in that the compensating element includes at least one spring.

13. Heat insulation and/or sound insulation with a supporting structure which is mounted on an object of insulation (1) according to any of claims 1 to 12, characterised in that the carrier ring (2) is provided as a hot construction arranged between an annular outer insulation (7e) and the object of insulation (1).

14. Heat insulation and/or sound insulation with a supporting structure which is mounted on an object of insulation (1) according to any of claims 1 to 6 as well as 8 to 13, characterised in that the carrier ring (2) is provided as a cold construction spaced apart from the object of insulation (1).

15. Heat insulation and/or sound insulation with a supporting structure which is mounted on an object of insulation (1) according to any of claims 1 to 14, characterised in that the suspension of the insulating wall (3b) from the carrier ring (2) includes a connecting bolt (25) which is connected to fixing brackets (23, 24) provided on the carrier ring (2) and insulating wall (3b).

16. Heat insulation and/or sound insulation with a Supporting structure which is mounted on an object of insulation (1) according to claim 15, characterised in that a screw joint is made between the connecting bolt (25) and the brackets (23, 24).

17. Heat insulation and/or sound insulation with a supporting structure which is mounted on an object of insulation (1) according to claim 16, characterised in that the screw joint comprises at at least one end of the connecting bolt (25) a screw passing through an oblong hole.

18. Heat insulation and/or sound insulation with a supporting structure which is mounted on an object of insulation (1) according to any of claims 1 to 17, characterised in that the insulating walls (3a, 3b) are formed by insulating elements (7) which can be connected to each other.

19. Heat insulation and/or sound insulation with a supporting structure which is mounted on an object of insulation (1) according to claim 18, characterised in that the insulating elements (7) are constructed as sheet metal cartridges filled with an insulating material.

20. Heat insulation and/or sound insulation with a supporting structure which is mounted on an object of insulation (1) according to either of claims 18 or 19, characterised in that the insulating elements (7) can be connected to each other by screw joints.

21. Heat insulation and/or sound insulation with a supporting structure which is mounted on an object of insulation (1) according to any of claims 18 to 20, characterised in that the insulating elements (7) are ring-shaped or ring segment-shaped.

22. Heat insulation and/or sound insulation with a supporting structure which is mounted on an object of insulation (1) according to any of claims 1 to 21, characterised in that the carrier ring (1) is connected to essentially vertically extending supporting elements (5) which can be connected to selected insulating elements (7b, 7i).

23. Heat insulation and/or sound insulation with a supporting structure which is mounted on an object of insulation (1) according to claim 22, characterised in that the supporting elements (5) are rod-shaped.

24. Heat insulation and/or sound insulation with a supporting structure which is mounted on an object of insulation (1) according to claim 22 or 23, characterised in that the supporting elements for connection to the insulating elements are connected to brackets (31) comprising a lateral slot (38) in which a connecting pin (32) can be inserted for suspension.

25. Heat insulation and/or sound insulation with a supporting structure which is mounted on an object of insulation (1) according to claim 24, characterised in that the connecting pin (32) can be connected at its lower end to a fixing element (34) connected to the insulating element (7b').

26. Heat insulation and/or sound insulation with a supporting structure which is mounted on an object of insulation (1) according to claim 25, characterised in that the connection with the fixing element (34) is made by a screw passing through an oblong hole (37).

27. Heat insulation and/or sound insulation with a supporting structure which is mounted on an object of insulation (1) according to any of claims 22 to 26, characterised in that the connection between the supporting element (5) and the carrier ring (2) is made by brackets (28, 30) connected to the carrier ring (2) and to the supporting element (5) and by a connecting bolt (25') arranged between the brackets (28, 30).

28. Heat insulation and/or sound insulation with a supporting structure which is mounted on an object of insulation (1) according to claim 27, characterised in that a screw joint is made between the brackets (28, 30) and the connecting bolt (25').

29. Heat insulation and/or sound insulation with a supporting structure which is mounted on an object of insulation (1) according to claim 28, characterised in that the screw joint at at least one end of the connecting bolt (25') includes a screw passing through an oblong hole.

30. Heat insulation and/or sound insulation with a supporting structure which is mounted on an object of insulation (1) according to any of claims 15 to 29, characterised in that the connecting bolt (25, 25') is adjustable in its length.

31. Heat insulation and/or sound insulation with a supporting structure which is mounted on an object of insulation (1) according to any of claims 22 to 30, characterised in that the supporting elements (5) are connected to each other by at least one ring (13) surrounding the object of insulation.

32. Heat insulation and/or sound insulation with a supporting structure which is mounted on an object of insulation (1) according to claim 31, characterised in that rings (13) and supporting elements (5) are provided in such a way that the object of insulation is surrounded by the rings and supporting elements after the fashion of a cage.

33. Heat insulation and/or sound insulation with a supporting structure which is mounted on an object of insulation (1) according to claim 31 or 32, characterised in that the rings (13) are connected to the supporting elements (5) by U-shaped members (43) encompassing the ring cross-section (13').

34. Heat insulation and/or sound insulation with a supporting structure which is mounted on an object of insulation (1) according to claim 33, characterised in that in the U-shaped member (43) is provided a clearance for movement of the ring (13').

35. Heat insulation and/or sound insulation with a supporting structure which is mounted on an object of insulation (1) according to any of claims 22 to 34, characterised in that the supporting elements (5) are connected at their upper and lower ends to the insulating elements (7b, 7i).

36. Heat insulation and/or sound insulation with a supporting structure which is mounted on an object of insulation (1) according to any of claims 22 to 35, characterised in that the insulating walls (3a, 3b) are arranged between the object of insulation (1) and the supporting elements (5).

37. Heat insulation and/or sound insulation with a supporting structure which is mounted on an object of insulation (1) according to any of claims 27 to 36, characterised in that the bracket (28) connected to the carrier ring (2''') is guided through a recess (29) in the supporting element (5').

## Revendications

1. Isolation thermique et/ou acoustique avec une construction de support fixée à un objet isolant (1), laquelle présente au moins une bague porteuse (2) maintenue par l'objet isolant (1) pour maintenir une paroi isolante (3a) supérieure portée par la bague porteuse, isolant l'objet isolant au-dessus de la bague porteuse et une paroi isolante (3b) inférieure accrochée à la bague porteuse, isolant l'objet isolant sous la bague porteuse, caractérisé en ce que
la bague porteuse (2) entoure l'objet isolant (1) comme une bague extérieure,
les parois isolantes supérieure (3a) et inférieure (3b) entourent l'objet isolant comme un revêtement extérieur, et
une grande partie de la paroi isolante supérieure (3a) s'étend globalement à la verticale au-dessus de la bague porteuse.

2. Isolation thermique et/ou isolation acoustique avec une construction de support fixée à un objet isolant (1) selon la revendication 1, caractérisée en ce que la bague porteuse (2) est accrochée à l'objet isolant (1) en au moins un point d'accrochage.

3. Isolation thermique et/ou isolation acoustique avec une construction de support fixée à un objet isolant (1) selon la revendication 2, caractérisée en ce que l'accrochage de la bague porteuse (2) sur l'objet isolant (1) comprend une console à bride (22) connectée à la bague porteuse, un goujon d'accrochage connecté (19) à la console à bride, et une paire de plaques de fixation (17) agencées l'une à côté de l'autre avec chaque fois deux alésages (18, 18a), le goujon d'accrochage (19) et un oeillet (16) connecté à l'objet isolant se trouvant dans un interstice entre les plaques de fixation et une connexion par vis étant réalisée au moyen d'une vis introduite dans les alésages (18, 18a) entre le goujon d'accrochage et la paire de plaques (17) ainsi qu'entre la paire de plaques (17) et l'oeillet (16).

4. Isolation thermique et/ou isolation acoustique avec une construction de support fixée à un objet isolant (1) selon la revendication 3, caractérisée en ce que le goujon d'accrochage présente sur son extrémité inférieure un filetage sur lequel un écrou (20) peut être vissé.

5. Isolation thermique et/ou isolation acoustique avec une construction de support fixée à un objet isolant (1) selon la revendication 3 ou la revendication 4, caractérisée en ce que le goujon d'accrochage (19) s'engage dans un trou long (21) formé dans une partie horizontale de la console à bride venant en appui contre l'écrou (20).

6. Isolation thermique et/ou isolation acoustique avec une construction de support fixée à un objet isolant (1) selon la revendication 1, caractérisée en ce que la bague porteuse (2) est portée au moins en un point d'appui par l'objet isolant (1).

7. Isolation thermique et/ou isolation acoustique avec une construction de support fixée à un objet isolant (1) selon l'une quelconque des revendications 1 à 6, caractérisée en ce que la bague porteuse (2) épouse la forme de l'objet isolant (1).

8. Isolation thermique et/ou isolation acoustique avec une construction de support fixée à un objet isolant (1) selon l'une quelconque des revendications 1 à 7, caractérisée en ce que la bague porteuse (2) présente au moins une incurvation (43) garantissant un accès vers la surface de l'objet isolant (1).

9. Isolation thermique et/ou isolation acoustique avec une construction de support fixée à un objet isolant (1) selon l'une quelconque des revendications 1 à 8, caractérisée en ce que la bague porteuse (2) présente au moins un élément compensateur destiné à la compensation des dilatations thermiques.

10. Isolation thermique et/ou acoustique avec une construction de support fixée à un objet isolant (1) selon l'une quelconque des revendications 1 à 9 caractérisée en ce que la bague porteuse (2) présente plusieurs segments.

11. Isolation thermique et/ou isolation acoustique avec une construction de support fixée à un objet isolant (1) selon la revendication 10, caractérisée en ce qu'il est prévu au moins un élément compensateur entre deux extrémités de deux segments de bague venant en butée l'une contre l'autre.

12. Isolation thermique et/ou acoustique avec une construction de support fixée à un objet isolant (1) selon l'une quelconque des revendications 9 à 11, caractérisée en ce que l'élément compensateur comprend au moins un ressort.

13. Isolation thermique et/ou acoustique avec une construction de support fixée à un objet isolant (1) selon l'une quelconque des revendications 1 à 12, caractérisée en ce que la bague porteuse (2) est prévue comme construction chaude agencée entre une isolation extérieure annulaire (7e) et l'objet isolant (1).

14. Isolation thermique et/ou acoustique avec une construction de support fixée à un objet isolant (1) selon l'une quelconque des revendications 8 à 13, caractérisée en ce que la bague porteuse (2) est prévue comme construction froide espacée de l'objet isolant (1).

15. Isolation thermique et/ou acoustique avec une construction de support fixée à un objet isolant (1) selon l'une quelconque des revendications 1 à 14, caractérisée en ce que l'accrochage de la paroi isolante (3b) sur la bague porteuse (2) comprend un goujon de connexion (25) qui est relié à des consoles de fixation (23, 24) prévues sur la bague porteuse (2) et la paroi isolante (3b).

16. Isolation thermique et/ou acoustique avec une construction de support fixée à un objet isolant (1) selon la revendication 15, caractérisée en ce qu'une connexion par vis est réalisée entre le goujon de connexion (25) et les consoles (23, 24).

17. Isolation thermique et/ou acoustique avec une construction de support fixée à un objet isolant (1) selon la revendication 16, caractérisée en ce que la connexion par vis présente sur au moins une extrémité du goujon de connexion (25) une vis introduite à travers un trou long.

18. Isolation thermique et/ou acoustique avec une construction de support fixée à un objet isolant (1) selon l'une quelconque des revendications 1 à 17, caractérisée en ce que les parois isolantes (3a, 3b) sont formées par des éléments isolants (7) pouvant être assemblés les uns aux autres.

19. Isolation thermique et/ou acoustique avec une construction de support fixée à un objet isolant (1) selon la revendication 18, caractérisée en ce que les éléments isolants (7) sont conformés en caissons de tôle remplies avec un matériau isolant.

20. Isolation thermique et/ou acoustique avec une construction de support fixée à un objet isolant (1) selon la revendication 18 ou la revendication 19, caractérisée en ce que les éléments isolants (7) peuvent être assemblés les uns aux autres au moyen de connexions par vis.

21. Isolation thermique et/ou acoustique avec une construction de support fixée à un objet isolant (1) selon l'une quelconque des revendications 18 à 20, caractérisée en ce que les éléments isolants (7) sont de forme annulaire ou de forme annulaire segmentée.

22. Isolation thermique et/ou acoustique avec une construction de support fixée à un objet isolant (1) selon l'une quelconque des revendications 1 à 21, caractérisée en ce que la bague porteuse (1) est connectée à des éléments de support (5) pouvant être assemblés avec des éléments isolants (7a, 7i) choisis qui s'étendent globalement à la verticale.

23. Isolation thermique et/ou acoustique avec une construction de support fixée à un objet isolant (1) selon la revendication 22, caractérisée en ce que les éléments de support (5) sont en forme de baguette.

24. Isolation thermique et/ou acoustique avec une construction de support fixée à un objet isolant (1) selon la revendication 22 ou la revendication 23, caractérisée en ce que les éléments de support, pour être connectés aux éléments isolants, sont connectés à des consoles (31) qui présentent une encoche latérale (38), dans laquelle une cheville de connexion (32) peut être introduite à des fins d'accrochage.

25. Isolation thermique et/ou acoustique avec une construction de support fixée à un objet isolant (1) selon la revendication 24, caractérisée en ce que la cheville de connexion (32) peut être assemblée sur son extrémité inférieure à un élément de fixation (34) connecté à l'élément isolant (7b').

26. Isolation thermique et/ou acoustique avec une construction de support fixée à un objet isolant (1) selon la revendication 25, caractérisée en ce que la connexion avec l'élément de fixation (34) est réalisée au moyen d'une vis introduite à travers un trou long (37).

27. Isolation thermique et/ou acoustique avec une construction de support fixée à un objet isolant (1) selon l'une quelconque des revendications 22 à 26, caractérisée en ce que la connexion entre l'élément de support (5) et la bague porteuse (2) est réalisée au moyen d'une console (28, 30) connectée à la bague porteuse (2) et d'une console connectée à l'élément de support (5) et d'un goujon de connexion (25') agencé entre les consoles (28, 30).

28. Isolation thermique et/ou acoustique avec une construction de support fixée à un objet isolant (1) selon la revendication 27, caractérisée en ce qu'une connexion par vis est réalisée entre les consoles (28, 30) et le goujon de connexion (25').

29. Isolation thermique et/ou acoustique avec une construction de support fixée à un objet isolant (1) selon la revendication 28, caractérisée en ce que la connexion par vis comprend, sur au moins une extrémité du goujon de connexion (25'), une vis introduite à travers un trou long.

30. Isolation thermique et/ou acoustique avec une construction de support fixée à un objet isolant (1) selon l'une quelconque des revendications 15 à 29, caractérisée en ce que le goujon de connexion (25, 25') est ajustable en longueur.

31. Isolation thermique et/ou acoustique avec une construction de support fixée à un objet isolant (1) selon l'une quelconque des revendications 22 à 30, caractérisée en ce que les éléments de support (5) sont assemblés l'un sous l'autre au moyen d'au moins une bague (13) entourant l'objet isolant.

32. Isolation thermique et/ou acoustique avec une construction de support fixée à un objet isolant (1) selon la revendication 31, caractérisée en ce que des bagues (13) et des éléments de support (5) sont prévus, de telle manière que l'objet isolant est entouré par les bagues et les éléments de support à la manière d'une cage.

33. Isolation thermique et/ou acoustique avec une construction de support fixée à un objet isolant (1) selon la revendication 31 ou la revendication 32, caractérisée en ce que les bagues (13) sont connectées aux éléments de support (5) au moyen d'une bride (43) saisissant la section de la bague (13').

34. Isolation thermique et/ou acoustique avec une construction de support fixée à un objet isolant (1) selon la revendication 33, caractérisée en ce qu'un jeu de déplacement pour la bague (131) est prévu dans la bride (43).

35. Isolation thermique et/ou acoustique avec une construction de support fixée à un objet isolant (1) selon l'une quelconque des revendications 22 à 34, caractérisée en ce que les éléments de support (5) sont connectés aux éléments isolants (7b, 7i) sur leurs extrémités supérieure et inférieure.

36. Isolation thermique et/ou acoustique avec une construction de support fixée à un objet isolant (1) selon l'une quelconque des revendications 22 à 35, caractérisée en ce que les parois isolantes (3a, 3b) sont agencées entre l'objet isolant (1) et les éléments de support (5).

37. Isolation thermique et/ou acoustique avec une construction de support fixée à un objet isolant (1) selon l'une quelconque des revendications 27 à 36, caractérisée en ce que la console (28) connectée à la bague porteuse (2''') est introduite à travers un creux (29) dans l'élément de support (5').
